# EUROPEAN PATENT APPLICATION

(11) **EP 2 602 569 A1**
(43) Date of publication of application: **12.06.2013**
(21) Application number: 11814141.5
(22) Date of filing: 04.08.2011
(51) Int. Cl.: F24J 2/14, F24J 2/54

(54) **STRUCTURE WITH PRIMARY-REFLECTOR SECURING BEAMS**

(30) Priority: 05.08.2010 ES 201001025
(71) Applicant: Abengoa Solar New Technologies, S.A., 41018 Sevilla (ES)
(72) Inventor: MUÑOZ GILABERT, Félix, E-41014 Sevilla (ES)
(74) Representative: Garcia-Cabrerizo y del Santo, Pedro Maria
(86) International application number: PCT/ES2011/000257
(87) International publication number: WO 2012/017109

(57) **Abstract**

Structure with primary-reflector securing beams for a solar collector, which comprises the following essential components:
- at least two components (1) located in a parallel manner, which comprise a three-bar frame (11) in the form of an equilateral triangle, positioned such that one of the vertices (13) thereof is the lowest point of the structure, and which has three shorter interior bars (12) located so as to simulate the triangle having an inscribed hexagon, within which runs the central tube of the structure, or torque box;
- two cantilever beams (2) in each triangle with bars (1), one beam starting from one of the sides of the triangle and the other from the other, said beams being completely symmetrical and it being possible for said beams to be produced from tubes or a stamped metal sheet;
- at least two straps (3) that run along the structure longitudinally, i.e. parallel to the torque box and to the absorber tube, and perpendicular to the cantilever beams (2), joining the entire series of the two above components (1, 2), which are repeated along the structure.

## Description

### Technical sector of the invention

This invention is framed within the sector of solar collectors, more specifically it relates to structures that are used for fastening the reflectors (mirrors) and the receptors, in charge of concentrating solar radiation, especially in cylindrical-parabolic collectors.

### Background of the invention

Electric power production plants based on solar radiation can use various types of solar collectors (cylindrical parabolic collectors, Stirling disc, central towers with heliostats, Fresnel collectors, etc.) and all of them require supporting structures for the mirrors in charge of concentrating the solar radiation.

Said structures, generally, further posses a device known as solar tracker that enables them to orient themselves towards the sun, which leads to obtaining high performances.

The invention claimed hereby, makes reference to the supporting structure of the solar collector module, the solar tracker, which can be subsequently coupled thereon, not being an object of the invention.

Many of the inventions of the state of the art describe lattice structures that support collectors of the cylindrical-parabolic type. Cylindrical-parabolic collectors in order to collect power from the sun use mirrors with a cylindrical-parabolic shape. A pipe or collector tube that receives the concentrated rays from the sun and where the fluid is heated passes through the focus of the parabola. Once the fluid is heated, which reaches temperatures close to 400 °C, if said fluid is vapor it is sent to a turbine for producing electricity or in some cases to an overheating stage for its ulterior passing through the turbine. If we count with another type of heat-transfer fluids that at said temperature are not in a vapor phase, then they are sent to a heat interchanger for producing thereof.

The structures that support these collectors are formed by a series of beams, arms and connections between them, being the beams, those components serving as a support for the central structure or torque box. These beams are subjected to a great torque and bending stress, and are normally very long, which causes problems due to the flexure it produces and in addition, it complicates their transport to the plant to an important extent.

Within the most current state of the art regarding the support structures of solar collectors modules are, for instance, document PCT/ES2009/070430 (the references relate to said document), which describes an improved structure applicable to cylindrical-parabolic collectors of solar energy, comprising: modules (2) supported by troughs (3), with mirrors (4) supported on a beam (5) or torque-transmitting cylinder, forming a parabola whose focal point crosses the absorbing tube (6). The supports (9) of the absorbing tube (6) on the collector module (2) or on the troughs (3) are able to slide, and enable the axle (8) or torque-transmitting cylinder to move longitudinally.

Document WO 2010/055397 (the references relate to said document) describes a cylindrical-parabolic solar concentrator, which is supported by two towers (12) in charge of supporting the tube (13), tube that can be rotated axially by means of a motor. The supporting structure is provided with a series of ribs (14), which are fixed transversely to the tube (13) and with a base (17) that attaches the mirror (15) to said ribs (14). Both the base (17) and the ribs (14) are made of composite materials and have the same thermal expansion coefficient. The ribs are designed with a series of concavities and convexities to achieve the intended stiffness. Each one of the arms or ribs (14) is composed by two half-ribs (18) which end in a seat with a rounded shape (19) inside which the tube (13) is placed, screwing then, both half ribs.

Still another invention, by way of example, can be found in document ES2274710 (the references relate to said document) wherein a holding arm is described, a support of a cylindrical-parabolic solar collector, and a process for manufacturing said arm. The arm is shaped to be coupled to a central body (1) of the collector by way of corbel, in a substantially perpendicular direction to a focal line (2) of the collector, having said arm a wedge shape, which has: a first side (10) provided with a supporting device (11) for supporting at least one mirror (3); a second side (20); a third side (30) provided with supporting devices (31) so the arm is supported by the central body (1). The arm is formed by at least one stamped metal sheet shaped to obtain a resistant structure to provide stiffness and carrying capacity by means of a plurality of ribs (42) that form a lattice structure that has a plurality of laminated portions (41) between said ribs.

In view of the described state of the art and many more existing developments thereof, the objective of the invention claimed hereby is to provide a structure, that like the previous ones, serves as the support of a solar collector module of a cylindrical-parabolic type, having a series of characteristics that make it substantially different from the known structures in the state of the art, bringing significant advantages both regarding the structural resistance, and the easiness and cost reduction in the transport and assembly thereof.

### Description of the invention

The invention consists of a structure with supporting beams of the primary reflector. The structure defines the support for a cylindrical-parabolic solar collector module.

Two alternative structures are going to be analyzed. In both of them the philosophy is the same and the components are all ordinary, the only variant being the geometry of the supporting beams.
- Triangular component with bars simulating an inscribed hexagon: the first of the essential components of the structure is composed of a three-bar frame in the form of an equilateral triangle, positioned such that one of the vertices thereof is the lowest point of the structure. This triangle is provided with three interior bars with a shorter length located so as to simulate the triangle having an inscribed hexagon. This "inscribed hexagon" is designed so that within it runs the central tube of the structure or torque box, in charge of supporting and transmitting the torque and bending stress, which the collector is subjected to and whose design is not an object of this invention. Generally, all of this is built using hot-rolled angles. This first component will be repeated several times along the entire length of the structure and in a parallel way.
- Cantilever beams: besides the triangle with the three interior bars simulating an inscribed hexagon, there is a second essential component in the structure like two cantilever beams in each triangle with bars. One beam starts from one of the sides of the triangle and the other form the other. They are completely symmetrical and replace the lattice structures typical in the state of the art. This cantilever beams can be made from two rectangular steel tube profiles or from stamped steel sheet. One option or the other will be selected depending on which will be more adequate for each case, always seeking the optimal thickness, based on the calculations of maximum stress, lineal buckling and deformations, that are made for each project.
- Longitudinal straps: the third essential component of the structure are a series of straps formed by "C" profiles, usually cold-rolled, which run along the structure longitudinally, i.e., parallel to the torque box and to the absorber tube and perpendicular to the cantilever beams. These straps join the entire series of the two above components, which are repeated along the structure; the triangle with the three bars that simulate an inscribed hexagon and; the cantilever beams, given that, depending on the length of the cylindrical-parabolic collector to be supported, more or less number of components will be employed. On the straps a series of staples are placed for securing the mirrors that make up the primary reflector, forming thus a spatial structure that supports the mirrored parabola.

These essential characteristics of the new structure solve the problems existing to date in an efficient and economical manner, in terms of torque, bending stress, wind loads and assembly of the structure.

### Description of the drawings

In order to complete the description being made, and with the aim of gaining a better understanding of the invention, a set of drawings is attached, wherein in an illustrative rather than limitative manner, the following has been represented:
Figure 1: perspective view of the structure with beams made from tubes
Figure 2: Front view of the structure with beams made from tubes
Figure 3: Perspective view of the structure with beams made from metal sheets
Figure 4: Front view of the structure with beams made from metal sheets
Figure 5: Plan views of the structure

The references of the figures represent:
1. Triangular component with bars simulating an inscribed hexagon
2. Cantilever beams
3. Longitudinal straps
11.Bars forming the triangle
12.Bars simulating the inscribed hexagon
13. Lower vertex of the triangle
14. Upper vertices of the triangle
21.Short rectangular tube made of steel
22. Long rectangular tube made of steel
23.Stamped metal sheet
24.Gaps
31.Staples

### Preferred embodiment of the invention

In order to gain a better understating of the invention, the solar collector module according to a preferred embodiment will be described below.

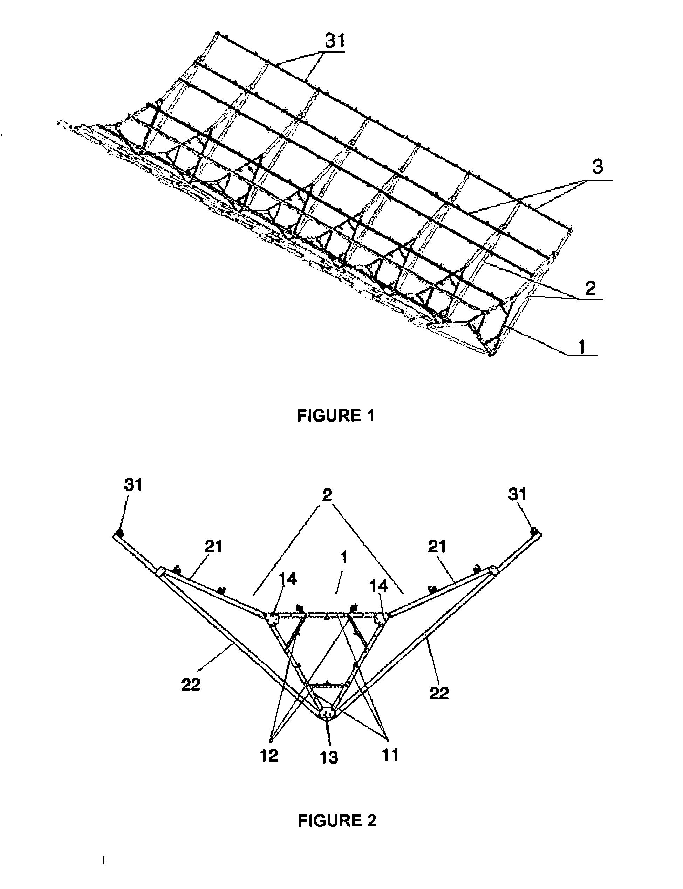

In figures 1-2 can be observed a preferred embodiment of the invention, wherein the cantilever beams are built using profiles of steel rectangular tubes.

In figure 1 a perspective view of the invention assembly is shown. In this figure, it can be observed a complete structure ready to support a cylindrical-parabolic collector. The structure is formed by eight triangular components with bars simulating an inscribed hexagon (1), all of them positioned in a parallel manner one to another and within which the central tube or torque box (not represented) would be supported, for which any geometry is possible. The structure is also provided with a series of cantilever beams (2). On either side of each of the triangular component with bars (1) is secured a cantilever beam (2). In the first preferred embodiment, these beams (2) are built using profiles of steel rectangular tubes. The third components that appear represented in figure 1 are the longitudinal straps (3). In the case of this preferred embodiment, eight are the number of straps (3) represented. All of them run longitudinally along the structure, i.e., would run parallel to the torque box and the absorber tube (not represented) and perpendicular to the cantilever beams (2). These straps join the entire series of the above components, which are repeated along the structure in parallel: the triangle with the bars simulating an inscribed hexagon (1) and the cantilever beams (2). A series of staples (31) are placed on the straps, for securing the mirrored parabola composing the primary reflector (not represented).

In figure 2 is represented a front view of the structure. In that figure it can be clearly appreciated the first essential components (1) of the structure. It is composed of a three-bar frame (11) in the form of an equilateral triangle, positioned such that one of the vertices (13) thereof is the lowest point of the structure. This triangle is provided with three shorter interior bars (12) located so as to simulate the triangle having an inscribed hexagon. This "inscribed hexagon" is designed in such a way that the central tube of the structure o torque box, not represented in the figure, runs within it. In this preferred embodiment, all the bars are produced from hot-rolled angles. The cantilever beams (2) are supported on the vertices (13, 14) of the triangular component. In the case of this first preferred embodiment the beams are formed by two tubes with different lengths (21, 22). The shorter tube (21) is joined to the triangular component (1) by one of its upper vertices (14) and runs at a certain angle until the other extremity reaches a higher position. This extremity of the shorter tube is joined to an intermediate point of the longer tube (22). The longer tube (22) starts from the lower vertex (13) of the triangular component (1) and finishes in what constitutes the higher point of the entire structure. At an intermediate point of its length, a junction secures onto it, the extremity of the shorter tube (21). On the other side of the triangular component with bars (1) a cantilever beam (2) is installed, which is identical to the one described previously, in such a way that the structure is completely symmetrical.

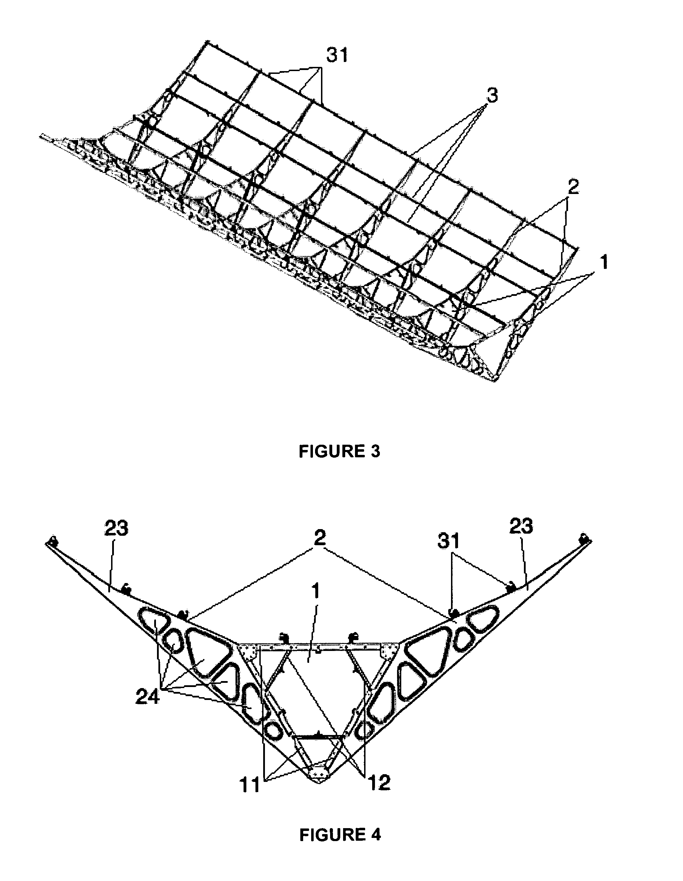

In figures 3-4 a preferred embodiment of the invention is observed, wherein the cantilever beams are made from stamped metal sheet profiles, in this particular case, steel stamped metal sheet.

In figure 3 is shown a perspective view of the complete structure. The structure is equivalent to the previous structure, with eight triangular components with bars (1), each one of them holding two symmetrical cantilever beams (2), only that this time in stamped metal sheet and eight longitudinal straps (3) that join the entire series of the above components and on which a number of staples (31) are placed, which will be the ones supporting the parabola of mirrors that make up the primary reflector.

In figure 4 these beams made from steel metal sheet can be seen in more detail. The triangular component (1) formed by three bars (11) and with three interior bars (12) simulating an inscribed hexagon is exactly identical to the one described in the previous embodiment. The difference being that the cantilever beams, which are secured onto the triangle, are this time formed by a stamped steel metal sheet (23). The securing to the triangle is carried out with rivets or an equivalent fastening system along the entire side of the pertinent triangle (11), not only at the vertices, like in the previous case. The metal sheet in addition is provided with a series of bores or the metal sheet forming the cantilever beam is provided with a series of bores or gaps (24) calculated so as to minimize the weight of the structure and to reduce the wind loads (24).

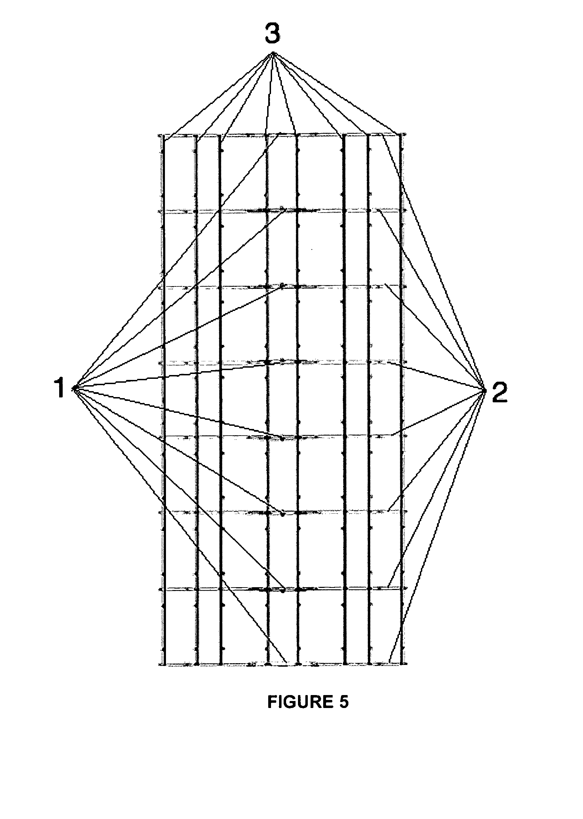

In figure 5 a plan view of the structure is shown, being the same for both types of embodiments. In this figure, the number of triangular components with bars (1) and cantilever beams (2) with which is provided this preferred embodiment (namely eight), can be seen more clearly, as well as all the distance the longitudinal straps (3) cover, joining together all the aforementioned parallel components.

The described structure with cantilever beams is specially designed for its application in cylindrical-parabolic collectors, but its extension to other field of the industry requiring similar characteristics is not ruled out.

## Claims

1. Structure with primary-reflector securing beams for a solar collector, **characterized in that** it comprises the following essential components:
- At least two components (1) located in a parallel manner, which comprise a three-bar frame (11) in the form of an equilateral triangle, positioned such that one of the vertices (13) thereof is the lowest point of the structure and which has three shorter interior bars (12) located so as to simulate the triangle having an inscribed hexagon, within which runs the central tube of the structure o torque box;
- two cantilever beams (2) in each triangle with bars (1), a beam starts from one of the sides of the triangle and the other beam from the other, being completely symmetrical;
- at least two straps (3) that run along the structure longitudinally, i.e. parallel to the torque box and to the absorber tube, and perpendicular to the cantilever beams (2), joining the entire series of the two above components (1, 2), which are repeated along the structure.

2. Structure with primary-reflector securing beams for a solar collector according to claim 1 **characterized in that** the cantilever beams (2) are made from steel rectangular tube profiles.

3. Structure with primary-reflector securing beams for a solar collector according to claim 2 **characterized in that** two tubes (21, 22) are used for producing each beam (2).

4. Structure with primary-reflector securing beams for a solar collector according to claim 3 **characterized in that** the tubes (21, 22) have different lengths.

5. Structure with primary-reflector securing beams for a solar collector according to claim 4 **characterized in that** the shorter tube (21) is joined to the triangular component (1) by one of its upper vertices (14) and runs at a certain angle until the other extremity reaches a higher position.

6. Structure with primary-reflector securing beams for a solar collector according to claim 5 **characterized in that** the longer tube (22) starts at the lowest vertex (13) of the triangular component (1) and ends in what constitutes the highest point of the entire structure, there being a junction, at an intermediate point of its length, securing the extremity of the shorter tube (21) onto it.

7. Structure with primary-reflector securing beams for a solar collector according to claim 1 **characterized in that** the cantilever beams (2) are produced from stamped metal sheet (23).

8. Structure with primary-reflector securing beams for a solar collector according to claim 7 **characterized in that** the securing to the triangle of the cantilever beam (2) is carried out with rivets or an equivalent fastening mean along the entire side of the pertinent triangle (11).

9. Structure with primary-reflector securing beams for a solar collector according to claim 8 **characterized in that** the metal sheet forming the cantilever beam is provided with a series of bores or gaps (24) calculated so as to minimize the weight of the structure and to reduce the wind loads.

10. Structure with primary-reflector securing beams for a solar collector according to claim 1 **characterized in that** the triangular component with interior bars (1) is built using hot-rolled angles.

11. Structure with primary-reflector securing beams for a solar collector according to claim 1 **characterized in that** the longitudinal straps (3) are made from cold-rolled "C"- profiles.

12. Structure with primary-reflector securing beams for a solar collector according to claim 1 **characterized in that** a series of staples (31) are placed on the straps (3) for securing the mirrors that make up the primary reflector, forming thus a spatial structure that supports the mirrored parabola.
